# EUROPÄISCHE PATENTSCHRIFT

(11) **EP 2 788 131 B1**
(45) Veröffentlichungstag und Bekanntmachung des Hinweises auf die Patenterteilung: **18.04.2018**
(21) Anmeldenummer: 12821107.5
(22) Anmeldetag: 05.12.2012
(51) Int. Cl.: B22C 9/06, B22D 17/26, B22D 7/06

(54) **KOKILLE ZUM HERSTELLEN VON GUSSTEILEN**
MOULD FOR PRODUCING CAST PARTS
LINGOTIÈRE POUR FABRIQUER DES PIÈCES COULÉES

(30) Priorität: 05.12.2011 DE 102011120220
(43) Veröffentlichungstag der Anmeldung: 15.10.2014
(73) Patentinhaber: Loewenstein, Jörg, 28203 Bremen (DE)
(72) Erfinder: Loewenstein, Jörg, 28203 Bremen (DE)
(74) Vertreter: Goddar, Heinz J.
(86) Internationale Anmeldenummer: PCT/DE2012/001162
(87) Internationale Veröffentlichungsnummer: WO 2013/083113

(56) Entgegenhaltungen:
- EP-A1- 2 508 322
- CN-A- 101 733 912
- DE-A1- 10 048 894
- US-A- 2 304 899
- US-A- 2 367 727
- US-A1- 2008 145 471
- US-A1- 2010 330 227
- ALESSANDRO BENINI: "Die Zwei-Platten-Druckgiessmaschine", GIESSEREI, GIESSEREI VERLAG, DUSSELDORF, DE, Bd. 97, Nr. 1, 1. Januar 2010 (2010-01-01) , Seiten 66-73, XP001571833, ISSN: 0016-9765

## Beschreibung

Die Erfindung betrifft eine Kokille zum Herstellen von Gussteilen nach Anspruch 1.

Eine ähnliche Kokille mit zwei Kokillenteilen, die relativ zueinander aus einer Offenstellung in eine Schließstellung beweglich sind, wobei die Kokillenteile in ihrer Schließstellung einen mit flüssiger Gießmasse füllbaren Formhohlraum definieren und in ihrer Offenstellung das Herausnehmen eines insbesondere durch zumindest teilweises Abkühlen verfestigten Gussteiles ermöglichen und in der Schließstellung mittels einer die beiden Kokillenteile lösbar verbindenden Verriegelungseinrichtung verriegelbar sowie vorgebbare Achsen mittels einer Greifvorrichtung, insbesondere eines Roboterarmes, verschwenkbar sind, ist aus der DE 10 2004 014 100 B3 bekannt. Bei der dort beschriebenen Vorrichtungsanordnung zum 5-achsigen Kippgießen von Kokillen wird eine in ihren Dimensionen hinsichtlich der Verriegelungseinrichtung für die in der Schließstellung miteinander zu verriegelnden Kokillenteile undefinierte Kippgießkokille verwendet, bei der die Kokille mittels eines Roboterarmes in die nach dem jeweiligen Gießprogramm gewünschten Positionen gekippt werden kann. Bei dieser Vorrichtung besteht ein Problem darin, den wechselseitigen Anpreßdruck der Kokillenteile aufrechtzuerhalten, wenn, in sinnentsprechender Abwandlung der bekannten Vorrichtung, die Kokille unabhängig von einer schweren Gießmaschine oder dergleichen frei verschwenkt wird.

Aus der US 2,367,727 ist eine Gießvorrichtung mit einer aus zwei zusammenfahrbaren Hälften bestehenden Kokille bekannt, wobei die beiden Hälften in einem Rahmen angeordnet sind, der um eine horizontale Schwenkachse schwenkbar mit einem Sockel verbunden ist und zur Montage von Formelementen aus einer horizontalen Arbeitsstellung in einer vertikale Montagestellung geschwenkt werden kann.

US 2008/0145471 A1 offenbart eine Anordnung zum Aufnehmen einer Gießform, mit zwei horizontal auf einer Sockelführung zueinander verfahrbaren vertikalen Aufspannplatten für Formhälften, die in einer zusammengefahrenen Stellung mittels einer Verriegelungseinrichtung aneinander verriegelbar sind.

Aus der EP 2 508 322 A1 ist eine Formspannvorrichtung mit einer ortsfesten und einer beweglichen, rechteckigen Formplatte bekannt.

DE 100 48 894 A1 offenbart eine Formenschließvorrichtung für Spritzgießverfahren mit einem oberen und einem unteren Formelement sowie mit einer Ausstoßvorrichtung zum Freigeben eines Formteils nach dem Gießvorgang.

Der Erfindung liegt die Aufgabe zugrunde, eine Kokille zu schaffen, bei der während der durch das Gießprogramm bedingten Schwenkbewegungen der Kokille durch einen der Kokille eigenen Verriegelungsmechanismus sichergestellt wird, dass nach dem Zusammenpressen der Kokillenteile und der Beaufschlagung der Kokillenteile mit einem gewünschten Preßdruck eine Verriegelung mittels einer in die Kokille integrierten Verriegelungseinrichtung vorgenommen werden kann.

Erfindungsgemäß wird diese Aufgabe durch eine Kokille nach Anspruch 1 gelöst. Vorzugsweise haben die beiden Formplatten dabei Rechteckform.

Eine weitere Ausführungsform der Erfindung ist gekennzeichnet durch eine Notentriegelung der Formplatten und Auswerfen des zumindest weitgehend verfestigten Gussteiles nach Abschluß des Gießprogramms.

Dabei kann vorgesehen sein, dass die Notentriegelung einen Gasdruckantrieb und von diesem beaufschlagte Schieberstangen und Auswerferstangen zum Entformen eines zumindest teilweise verfestigten Gussteiles aufweist.

Bei denjenigen Ausführungsformen der Erfindung, bei denen eine Notentriegelung der beanspruchten Art vorgesehen ist, sorgt diese dafür, dass die erstarrenden bzw. erstarrten Gussteile unabhängig von der jeweiligen Position und Prozeßphase, in der sich die Kokille befindet, zuverlässig entformt werden können.

Insgesamt liegt der Erfindung die überraschende Erkenntnis zugrunde, dass es gelingt, die gestellte Aufgabe in eleganter Weise zu lösen, indem die Kokille selbst "autark" mit dem erfindungsgemäßen Verriegelungsmechanismus versehen wird, der es ermöglicht, nach dem Zusammenpressen der Formplatten bzw. der durch diese gebildeten Kokillenteile bzw. - hälften und der Beaufschlagung der Formplatten mit dem gewünschten Schließdruck den durch die Formplatten gebildeten Formhohlraum zuverlässig dicht zu halten, wobei gleichzeitig durch die nahezu uneingeschränkte Bewegungsmöglichkeit mittels eines Roboterarmes oder dergleichen eine einwandfreie Benetzung aller diesbezüglich definierten Bereiche des Formhohlraumes möglich ist.

Verriegelungseinrichtungen der erfindungsgemäß vorgesehenen Art sind weder bei der gattungsgemäßen Vorrichtung noch bei Kokillen gemäß DE-PS 1 243 337, DE-OS 25 45 178 und/oder DE 34 22 121 vorgesehen. Keine dieser Druckschriften zeigt das Verschwenken einer Kokille und/oder einer frei, z. B. durch einen Roboterarm, handhabbaren Gießkokille, die unter Aufrechterhaltung der Schließkraft selbsttätig verriegelbar wäre. Vielmehr handelt es sich stets um Gießmaschinen, bei denen die entsprechenden Handhabungseinrichtungen für die Gießkokille in eine schwere Gesamtvorrichtung integriert sind, die konstruktiv und in der Handhabung wesentlich aufwendiger als die erfindungsgemäße Kokille ist.

Der Stand der Technik zeigt insbesondere auch keinerlei Hinweis auf eine Notentriegelung der bevorzugten Ausführungsform der Erfindung vorgesehen Art.

Weitere Merkmale und Vorteile der Erfindung ergeben sich aus den Ansprüchen und aus der nachstehenden Beschreibung, in der Ausführungsbeispiele anhand der schematischen Zeichnungen im Einzelnen erläutert sind.

Dabei zeigt:
- Fig. 1: ein Ausführungsbeispiel einer Kokille nach der Erfindung in schematischer Seitenansicht, teilweise geschnitten, in der Offenstellung des Verriegelungsmechanismus; und
- Fig. 2: das Ausführungsbeispiel von Figur 1 in Figur 1 entsprechender Darstellung bei geschlossenem Verriegelungsmechanismus.
- Fig. 3: in schematischer Seitenansicht, teilweise geschnitten, ein Ausführungsbeispiel einer erfindungsgemäßen Kokille mit Notentriegelung in unverriegeltem Zustand;
- Fig. 4: das Ausführungsbeispiel von Fig. 3 in verriegeltem Zustand;
- Fig. 5: das Ausführungsbeispiel von Fig. 3 und Fig. 4 nach erfolgter Notentriegelung.

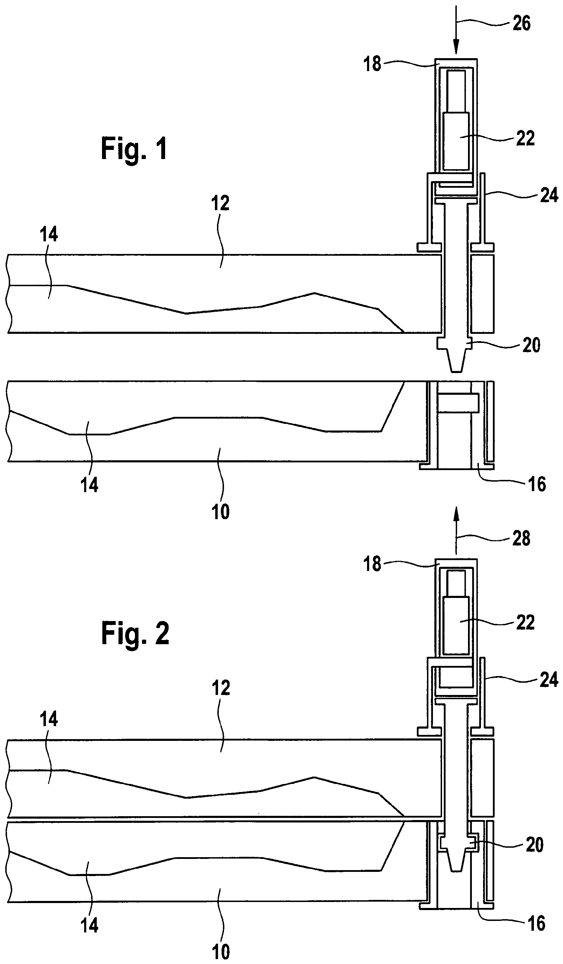

Wie Figur 1 zeigt, weist das dort gezeigte Ausführungsbeispiel einer erfindungsgemäßen Kokille zum Herstellen von Metallgussteilen vertikal übereinander angeordnet eine in der Zeichnung unten dargestellte erste Formplatte 10 und eine in der Zeichnung oben dargestellte zweite Formplatte 12 auf, die, wie in der Zeichnung ebenfalls schematisch dargestellt, in der geschlossenen Stellung (Figur 2) einen Formhohlraum 14 definieren. In Figur 1 ist die zweite Formplatte 12, bei der es sich in üblicher Weise um eine im wesentlichen rechteckige, in der in Figur 1 und 2 gezeigten Stellung horizontal angeordnete Formhälfte einer verriegelbaren Schwenkkokille handelt, mit Abstand oberhalb der ersten Formplatte 10 angeordnet, so dass der Formhohlraum 14 seitlich zugänglich ist, wie dies insbesondere zum Herausnehmen eines fertig gegossenen Metallgussteiles notwendig ist. An der in der Zeichnung rechten Seite der in Figur 1 und 2 gezeigten Kokille befindet sich eine Verriegelungseinrichtung, die eine in der ersten Formplatte 10 angeordnete Verriegelungshülse 16, eine an der zweiten Formplatte 12 vorgesehene Zughülse 18 und einen Zugbolzen 20 aufweist, der durch eine als Kraftspeicher dienende Gasdruckfeder 22 beaufschlagbar ist. Der Zugbolzen 20 ist in einer Verriegelungsaufnahme 24 in in Figur 1 und 2 gesehen vertikaler Richtung höhenverschiebbar.

Die erfindungsgemäße Kokille wird bei dem Ausführungsbeispiel von Figur 1 und 2 wie folgt eingesetzt: Zunächst wird in Richtung des Pfeiles 26 zum Zusammenpressen der Formplatten 10, 12, d.h., zum Nach-Unten-Pressen der zweiten Formplatte 12 aus der in Figur 1 gezeigten oberen Stellung in eine der ersten Formplatte 10 benachbarte untere Stellung auf die zweite Formplatte 12 eine Schließkraft ausgeübt, z.B. durch eine entsprechende Presseinrichtung einer Gießmaschine, wie sie auch bei herkömmlichen Schwenkkokillen eingesetzt wird. Sobald die Schließkraft, in Richtung des Pfeiles 26 in Figur 1 wirkend, die zweite Formplatte 12 an die erste Formplatte 10 angedrückt und damit den Formhohlraum in der aus Figur 2 ersichtlichen Weise geschlossen hat, und zwar entgegen der Kraft der Gasdruckfeder 22, die als Kraftspeicher dient, drückt die in Richtung des Pfeiles 28 von Figur 2 wirkende Kraft der Gasdruckfeder 22 die Zughülse 18 nach oben, wodurch der Zugbolzen 20 eine andauernde Verriegelung der Formplatten 10, 12 in der Schließstellung bewirkt.

In diesem verriegelten, unter der Spannung bzw. Schließkraft der Gasdruckfeder 22 stehenden Verriegelungszustand ist die aus den verriegelten Formplatten 10, 12 bestehende Kokille "autark" verriegelt, so dass sie mittels einer Handhabungseinrichtung, die zum Aufrechterhalten der die Formplatten 10, 12 zusammenpressenden Schließkraft nicht beizutragen braucht, die Kokille frei verschwenkt werden kann, wie es zum Benetzen bzw. Erreichen aller erforderlichen Bereiche des Formhohlraumes 14 durch das zwischenzeitlich eingefüllte flüssige Metall notwendig ist. Nach Abschluss des Gießvorganges und entsprechendem Abkühlen der Kokille können die Formplatten 10, 12 wieder durch Anheben der zweiten Formplatte 12 aus der in Figur 2 gezeigten Verriegelungsstellung in die in Figur 1 gezeigte Offenstellung gebracht werden, woraufhin dann das gegossene Metallgussteil aus dem Formhohlraum 14 entfernt werden kann.

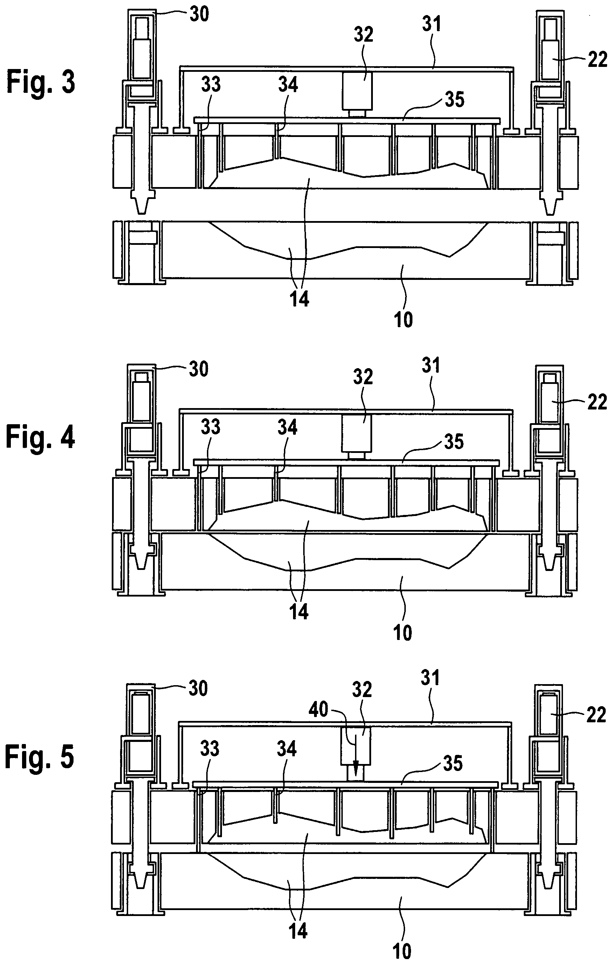

Beim Ausführungsbeispiel gemäß den Fig. 3 - 5 ist eine Notentriegelung vorgesehen, die dem Umstand Rechnung trägt, daß bei starkem Abkühlen erstarrende Gussteile auf den Formflächen der Kokillenteile "aufschrumpfen" können. Die sich zusammenziehende Gussmasse, insbesondere z. B. eine Leichtmetalllegierung, kann sich hierbei im Formhohlraum derart verkeilen, dass bei einer Entnahme des Gussteils zum einen ein stark erhöhter Aufwand betrieben werden muß, um das Gussteil aus der Form zu lösen, zum anderen aber auch mit einer Beschädigung des Gussteils oder gar der Kokille zu rechnen ist.

Gießmaschinen der herkömmlichen Art, bei denen also die Formhälften in schwere, kompakte Gießmaschinen integriert sind, lösen diese Problematik durch das Nutzen von Ausstoßerfunktionen nach Ablauf einer zuvor definierten Zeitspanne.

Derartige Ausstoßerfunktionen entsprechen den Mechanismen, die während des regulären Betriebs ebenfalls die Gussteile aus den Kokillen entformen.

Eine frei bewegliche Kokille hingegen, wie sie in dem Ausführungsbeispiel gemäß Fig. 1 und Fig. 2 gezeigt und anhand dieser Figuren beschrieben ist, ist nicht in allen Phasen des Prozesses an die Mechanismen einer Gießmaschine zum Entformen der Gussteile angeschlossen. Somit können Prozeßzustände auftreten, in denen es nicht möglich ist, die Gussteile zu entformen, auch wenn der hierfür erforderliche Zeitpunkt bereits erreicht wurde.

Aus diesem Grund ist eine Notentriegelung gemäß dem Ausführungsbeispiel der Fig. 3 - 5 derart gestaltet, daß unabhängig von der jeweiligen Position und Prozeßphase, in der sich die Kokille befindet, eine Entformung des Gussteils erfolgen kann.

Beim Ausführungsbeispiel von Fig. 3 - 5 ist eine Notentriegelung 32 vorgesehen, die eine Gasdruckfeder aufweist, welche durch entsprechende Ventilschaltung mit Druck beaufschlagbar ist. Die Kraft wirkt dabei gegen die Kokillenverriegelung, wobei diese Kraft aber kleiner ist als die durch die Gasdruckfeder 22 von Fig. 1 und Fig. 2 erzeugte Schließkraft. Demzufolge kann die in Fig. 3 - 5 gezeigte Gießkokille, die im Hinblick auf den übrigen Aufbau, soweit nicht die Notentriegelung betroffen ist, dem Ausführungsbeispiel gemäß Fig. 1 und Fig. 2 entspricht, durch die Gasdruckfeder 22 aus der in Fig. 3 gezeigten unverriegelten Stellung in die Verriegelungsstellung gemäß Fig. 4 überführt werden, ohne daß der in der Notentriegelung 32, die durch eine Gasdruckfeder realisiert ist, erzeugte Kraft die Formhälften auseinander drücken könnte.

Wird jedoch die Gasdruckfeder 22 gemäß Fig. 1 - 5 druckentlastet, so schiebt die Notentriegelung 32 Schieberstangen 33 (an einer Auswerferplatte 35 sitzend, die mittels der Notentriegelung 32 betätigbar ist) und Auswerferstange 34 aus der in Fig. 4 gezeigten Schließstellung in die in Fig. 5 gezeigte Position, wodurch die Formhälften auf gegenseitigen Abstand gebracht werden (durch die Schieberstangen 33) und das Gussteil (durch die Auswerferstangen 34) entformt wird.

Der Gasdruckantrieb der Notentriegelung lässt sich also im Falle der Verwendung eines Verriegelungssystems auf Gasdruckfederbasis mit letzterem kombinieren, wobei der im Verriegelungssystem gespeicherte Druck für die Notentriegelung genutzt werden kann. Dies geschieht dadurch, daß der in der Gasdruckfeder 22 gespeicherte Druck durch Öffnen eines Ventils von dort in die Notentriegelung 32 übergeleitet wird und damit die Notentriegelung bewirkt.

Entsprechend den Mechanismen konventioneller Gießmaschinen ist das Notentriegelungssystem gemäß Fig. 3 - 5 gegebenenfalls bei beiden Formhälften anwendbar, wodurch ein beidseitiges Entformen ermöglicht wird.

## Patentansprüche

1. Kokille zum Herstellen von Gussteilen, mit zwei Kokillenteilen, die relativ zueinander aus einer Offenstellung in eine Schließstellung beweglich sind, wobei die Kokillenteile in ihrer Schließstellung einen mit flüssiger Gießmasse füllbaren Formhohlraum definieren und in ihrer Offenstellung das Herausnehmen eines insbesondere durch zumindest teilweises Abkühlen verfestigten Gussteiles ermöglichen und in der Schließstellung mittels einer die beiden Kokillenteile lösbar verbindenden Verriegelungseinrichtung verriegelbar sowie um vorgebbare Achsen mittels einer Greifvorrichtung frei verschwenkbar sind, wobei die relativ zueinander beweglichen Kokillenteile zwei Formplatten (10, 12) sind, die im wesentlichen gradlinig entlang einer im wesentlichen senkrecht zur Plattenebene verlaufenden Bewegungsachse relativ zueinander aus einer Offenstellung in eine Schließstellung beweglich sind, wobei die die beiden Formplatten (10, 12) lösbar verbindende Verriegelungseinrichtung (16, 18, 20) in der Schließstellung das Verriegeln der Formplatten in zusammengepresstem Zustand mit der Maßgabe bewirkt, dass der Verriegelungsdruck in der Schließstellung der Formplatten aufrechterhalten bleibt; dass die Verriegelungseinrichtung einen Kraftspeicher (22) mit einer Gasdruckfeder zum Aufrechterhalten des die Formplatten (10, 12) zusammenpressenden Schließdrucks nach Zusammenpressen der Formplatten durch eine im wesentlichen senkrecht zur Formplattenmittelebene wirkende kokillenfremde Schließeinrichtung aufweist; und dass die Verriegelungseinrichtung an einer der Formplatten (10) eine Verriegelungshülse (16), an der anderen Formplatte (12) eine mit der Verriegelungshülse (16) im wesentlichen fluchtende Zughülse (18) und einen mit der Verriegelungshülse (16) und der Zughülse (18) zusammenwirkenden, im wesentlichen senkrecht zur Formplattenebene beweglichen Zugbolzen (20) aufweist, der in einer an einer der Formplatten vorgesehenen Verriegelungsaufnahme (24) in durch den Kraftspeicher (22) beaufschlagbarer Weise axial längsverschieblich gelagert ist.

2. Kokille nach Anspruch 1, **dadurch gekennzeichnet, dass** die Formplatten (10, 12) Rechteckform haben.

3. Kokille nach Anspruch 1 oder 2, **gekennzeichnet durch** eine Notentriegelung (32) der Formplatten (10) und Auswerfen des zumindest weitgehend verfestigten Gussteiles nach Abschluß des Gießprogramms.

4. Kokille nach Anspruch 3, **dadurch gekennzeichnet, dass** die Notentriegelung (32) einen Gasdruckantrieb und von diesem beaufschlagte Schieberstangen (33) und Auswerferstangen (34) zum Entformen eines zumindest teilweise verfestigten Gussteiles aufweist.

## Claims

1. Mould for producing cast parts, having two mould parts, which are movable with respect to each other from an open position into a closed position, wherein the mould parts in their closed position define a mould cavity fillable with liquid casting compound and in their open position enable removal of a cast part which has in particular solidified by at least partial cooling and are lockable in their closed position by means of a locking device which joins the two mould parts so as to be releasable and which mould parts may be freely swung around predeterminable axes by means of a gripping device, **characterized in that** the mould parts movable with respect to each other are two mould plates (10, 12), which are movable with respect to each other from an open position into a closed position in an essentially straight line along an axis of movement which is essentially perpendicular to the planes of said plates, wherewith in the closed position the locking device (16, 18, 20) which joins the two mould plates (10, 12) so as to be releasable brings about the locking of the mould plates in-pressed together state with the stipulation that the locking pressure is maintained while the mould plates are in the closed position; and further **characterized in that** the locking device has an energy storage means (22) with a gas-pressure spring to maintain the closing pressure which presses the mould plates (10, 12) together after the pressing together of the mould plates by a closing device which is extrinsic to the mould, which closing device acts essentially perpendicular to the midplane of the mould plates; and **in that** the locking device has a locking sleeve (16) at one of the mould plates (10) and a tension sleeve (18) at the other mould plate (12), which tension sleeve is essentially aligned one with the locking sleeve (16) and further has a movable tension bolt (20) which interacts with the locking sleeve (16) and the plane of the mould plates, and is axially mounted in a locking receptacle (24), provided at one of the mould plates, with the movement of the bolt being subject to the action of pressure from the energy storage means (22).

2. Mould according to claim 1, **characterized in that** the mould plates (10, 12) have a rectangular shape.

3. Mould according to claim 1 or 2, **characterized by** an emergency release mechanism (32) of the mould plate (10) and ejection of the at least substantially solidified cast part after conclusion of the casting program.

4. Mould according to claim 3, **characterized in that** the emergency release mechanism (32) has a gas pressure actuator and has push rods (33) and ejector rods (34) which are charged by this for demoulding of an at least partly solidified cast part.

## Revendications

1. Lingotière permettant de fabriquer des pièces coulées, ayant deux parties de lingotière, qui sont mobiles l'une par rapport à l'autre d'une position ouverte à une position fermée, dans laquelle les parties de lingotière dans leur position fermée définissent une cavité de lingotière en mesure d'être remplie au moyen d'un mélange de coulage liquide et dans leur position ouverte permettent de retirer une pièce coulée qui a été en particulier solidifiée par un refroidissement au moins partiel et sont en mesure d'être verrouillées dans leur position fermée au moyen d'un dispositif de verrouillage qui assemble les deux parties de lingotière afin de les rendre libérables et parties de lingotière qui peuvent être librement balancées autour d'axes en mesure d'être prédéterminés au moyen d'un dispositif de préhension, **caractérisée en ce que** les parties de lingotière mobiles l'une par rapport à l'autre sont deux plaques de lingotière (10, 12), qui sont mobiles l'une par rapport à l'autre d'une position ouverte à une position fermée en une ligne essentiellement droite le long d'un axe de mouvement qui est essentiellement perpendiculaire par rapport aux plans desdites plaques, au moyen desquelles, dans la position fermée, le dispositif de verrouillage (16, 18, 20) qui assemble les deux plaques de lingotière (10, 12) afin de les rendre libérables permet le verrouillage des plaques de lingotière en un état dans lequel elles sont comprimées ensemble avec la stipulation comme quoi la pression de verrouillage est maintenue alors que les plaques de lingotière sont dans la position fermée ; et **caractérisée par** ailleurs **en ce que** le dispositif de verrouillage a un moyen de stockage d'énergie (22) avec un ressort à pression à gaz pour maintenir la pression de fermeture qui comprime les plaques de lingotière (10, 12) ensemble après la compression ensemble des plaques de lingotière par un dispositif de fermeture qui est extrinsèque par rapport à la lingotière, dispositif de fermeture qui agit de manière essentiellement perpendiculaire par rapport au plan médian des plaques de lingotière ; et **en ce que** le dispositif de verrouillage a un manchon de verrouillage (16) au niveau d'une des plaques de lingotière (10) et un manchon de tension (18) au niveau de l'autre plaque de lingotière (12), manchon de tension qui est essentiellement aligné sur le manchon de verrouillage (16) et a par ailleurs un boulon de tension mobile (20) qui interagit avec le manchon de verrouillage (16) et le plan des plaques de lingotière, et qui est monté de manière axiale dans un réceptacle de verrouillage (24), mis en oeuvre au niveau d'une des plaques de lingotière, le mouvement du boulon étant soumis à l'action de pression du moyen de stockage d'énergie (22).

2. Lingotière selon la revendication 1, **caractérisée en ce que** les plaques de lingotière (10, 12) ont une forme rectangulaire.

3. Lingotière selon la revendication 1 ou la revendication 2, **caractérisé par** un mécanisme de libération d'urgence (32) de la plaque de lingotière (10) et l'éjection de ladite pièce coulée solidifiée au moins partiellement après la conclusion du programme de coulage.

4. Lingotière selon la revendication 3, **caractérisée en ce que** le mécanisme de libération d'urgence (32) a un actionneur à pression à gaz et a des tiges de poussée (33) et des tiges d'éjection (34) qui sont chargées de ce fait à des fins de démoulage d'une pièce coulée solidifiée au moins partiellement.
